(19) Europäisches Patentamt
European Patent Office
Office européen des brevets

(11) EP 3 916 946 A1

(12) EUROPEAN PATENT APPLICATION

(43) Date of publication:
01.12.2021 Bulletin 2021/48

(51) Int Cl.:
*H02J 3/32* (2006.01)  *H02J 7/00* (2006.01)

(21) Application number: 21171934.9

(22) Date of filing: 04.05.2021

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 29.05.2020 JP 2020093945

(71) Applicant: Hitachi, Ltd.
Tokyo 100-8280 (JP)

(72) Inventors:
• HONZAWA, Shinichiro
Tokyo, 100-8280 (JP)
• KONNO, Hiromichi
Tokyo, 100-8280 (JP)
• AIHARA, Takashi
Tokyo, 100-8280 (JP)
• ONOSE, Takayuki
Tokyo, 100-8280 (JP)

(74) Representative: MERH-IP Matias Erny Reichl
Hoffmann
Patentanwälte PartG mbB
Paul-Heyse-Strasse 29
80336 München (DE)

(54) **POWER STORAGE SYSTEM CONTROL DEVICE, POWER STORAGE SYSTEM, AND PROGRAM**

(57) In order to suppress a frequency change of a power system (6), a power storage system (1) comprising a first power storage device (26A) and a second power storage device (26B) is provided. The power storage devices have different characteristics. It is preferable that the first power storage device can respond at a higher speed than the second power storage device, and the first power storage device has a lower capacity than the second power storage device. A power storage system control device (100) includes a distribution condition output unit (102, 104) which determines how a total charge and discharge command value is to be distributed between the first and second power storage devices, based on a state-of-charge of the first power storage device, to suppress overcharging or over-discharging of the first power storage device.

FIG. 1

EP 3 916 946 A1

**Description**

BACKGROUND OF THE INVENTION

1. Field of the Invention

The prevent invention relates to a power storage system control device, a power storage system, and a program.

2. Description of the Related Art

As a technique of the related art of the field of the invention, an abstract of the following JP-A-2010-009840 states that "there is provided a highly reliable battery pack in which even when the number of storage batteries constituting the battery pack increases, capacity variation between storage batteries is suppressed, and performance degradation due to overcharging or over-discharging (reverse charging) of a storage battery having a low capacity is reliably suppressed. The battery pack of the invention includes a storage battery group A in which a plurality of storage batteries A are connected in series and a storage battery B which is connected in series with the storage battery group A and has a lower capacity than the storage battery A. The storage battery A is set to a state in which a charge electricity amount is larger than that of the storage battery B.".

However, according to the technique described above, it may not be possible to appropriately suppress the overcharging or the over-discharging particularly for the storage battery on a low capacity side.

SUMMARY OF THE INVENTION

The invention has been made in view of the above circumstances, and an object of the invention is to provide a power storage system control device, a power storage system, and a program capable of suppressing overcharging or over-discharging of a storage battery.

In order to solve the above problems, a power storage system control device according to the invention includes: a distribution condition output unit configured to, when a power storage system including a first power storage device configured to output power to a power system and a second power storage device having a characteristic different from that of the first power storage device and configured to output the power to the power system outputs the power to the power system, output a distribution condition for distributing a total output command value, which is a command value obtained by summing up the power to be output by the first and second power storage devices, to the first power storage device and the second power storage device; and / or a command value output unit configured to output, based on the distribution condition, a first command value for commanding the power output from the first power storage device and a second command value for commanding the power output from the second power storage device.

According to the invention, the overcharging or over-discharging of the power storage device can be suppressed.

BRIEF DESCRIPTION OF THE DRAWINGS

FIG. 1 is a block diagram of a power storage system according to a first embodiment.
FIG. 2 is a block diagram of a control algorithm according to a second embodiment.
FIG. 3 is a diagram showing examples of a total charge and discharge command value, an A system charge and discharge command value, and a B system charge and discharge command value.
FIG. 4 is a graph showing an operation of a time constant command unit according to a third embodiment.
FIG. 5 is a flowchart of a filter time constant setting routine according to the third embodiment.
FIG. 6 is a graph showing an operation of a time constant command unit according to a fourth embodiment.
FIG. 7 is a flowchart of a filter time constant setting routine according to the fourth embodiment.

DESCRIPTION OF THE PREFERRED EMBODIMENTS

[Outline of Embodiment]

Hereinafter, an outline of a preferred embodiment will be described.

Since generated power of renewable energy is influenced by a season and weather, a frequency and a voltage of a power system in which the generated power and the influences of the season and the weather are connected may be unstable, and system stability may decrease. As one of countermeasures, it is conceivable to provide a power storage system in order to absorb an output change of a renewable energy power generation device, and to implement system stabilization by charging and discharging the power storage system in accordance with a change in a system frequency.

When a large amount of renewable energy is present for a system capacity, the power system is likely to be unstable for a steep output change. In order to compensate for this, when the frequency changes due to the renewable energy, the charging and discharging is preferably performed for the power system at a high speed from the power storage system. Accordingly, the output change of the renewable energy from the power system appears to be slow, which can contribute to the system stabilization. When an output command value is given from a control unit to a power storage device, it is important for the stabilization that the power storage device responds to the output command value at a high speed. Then, in a case of coping with a short-time output change, it is essential to use a power storage device capable of the short-time output change with a high output.

However, such a power storage device is more expensive than a power storage capacity, and is economically disadvantageous in a situation where a long time output is required. In the related art, since the power storage system is configured by aligning the same type of storage batteries, when a storage battery having excellent responsiveness is required, the power storage device is expensive and has a large capacity. In this way, an increase in an initial cost causes introduction of the power storage system not to proceed. Therefore, in a preferred embodiment to be described later, a power storage system which combines power storage devices having different characteristics is constructed in order to reduce the initial cost, and a control method is provided in which a total output command to the power storage system is optimally distributed to each power storage device.

More specifically, in the preferred embodiment, by using a power storage device A corresponding to a short-time high-output change and a power storage device B capable of a long-time large-capacity output, a power storage system capable of performing charging and discharging for absorbing a change from a short time to a long time is implemented. By using a control method in which the power storage device A (lithium capacitor, lithium battery, and the like), which is excellent in the responsiveness but is expensive and thus difficult to be mounted with a large capacity, absorbs a steep output change (short period change), and the power storage device B (lead battery and the like), which is inexpensive and thus easy to be mounted with the large capacity, absorbs an output of a long period change, the initial cost is reduced while satisfying an output command to the power storage system.

In order to implement this, a command value obtained by passing through a high-pass filter with respect to a total charge and discharge command value is set as a command value for the power storage device A, and a command value obtained by passing through a low-pass filter is set as a command value for the power storage device B. By setting the power storage device A on a high-pass filter side, since a power storage capacity of the power storage device A can be reduced, and the power storage device A can cope with the steep output change, the cost can be reduced while satisfying an output command. Further, by using the same time constant for the filter, an output distribution ratio to the power storage devices A and B can be adjusted. For example, by increasing the filter time constant, the output distribution ratio to the power storage device A is increased, and by decreasing the filter time constant, the output distribution ratio of the power storage device B can be increased. A control method of generating the output command in accordance with the change in the system frequency and distributing the output command to each power storage device through the filter is referred to as system frequency stabilization control.

The generated power of the renewable energy changes with a climate change caused by the season. The system frequency is gentle in spring and autumn in which the climate change is gentle, and the system frequency changes steeply in summer and winter in which the climate change is severe. When the system frequency changes steeply and repeatedly, an operating rate of the power storage device A is improved. However, since the power storage device A has a small capacity, the power storage device A is likely to be overcharged and over-discharged. Further, when the change in the system frequency is small, a charging and discharging time of the power storage device A is reduced, and the operating rate of the power storage device A is lowered. That is, it is preferable to adjust the filter time constant in accordance with the climate change, and the operating rate of the power storage device A can be improved by applying an appropriate filter time constant.

In order to set the filter time constant in accordance with the climate change, in the preferred embodiment, a control method is used in which the filter time constant is automatically and periodically changed with reference to transition of a state of charge (SOC) of the power storage device A in a certain time domain. When a maximum SOC and a minimum SOC of the power storage device A in a certain time domain are in an overcharging domain or an over-discharging domain, the output distribution ratio of the power storage device A is reduced by reducing the filter time constant. Further, when the maximum SOC and the minimum SOC are in a central domain (SOC = about 50%), the output distribution ratio of the power storage device A is increased by increasing the filter time constant. By repeatedly adjusting the filter time constant for each certain time domain, the filter time constant can be set in accordance with the climate. The filter time constant set here is referred to as a filter reference time constant.

Further, particularly regardless of the weather, the power storage device A may be overcharged or over-discharged when the system frequency steeply changes due to a power failure of the power system, lightning strike, and the like. In this case, the power storage device A is limited in the charging and discharging, and the power storage system may not satisfy a request for the output command. That is, it is considered that the system frequency change cannot be absorbed and a system frequency suppression effect is reduced.

In the preferred embodiment, in order to solve the technical problem, the control method is used in which the filter time constant is automatically adjusted in accordance with the SOC of the power storage device A having a small capacity. When the power storage device A is to be overcharged (or over-discharged) and receives a command of a charging (or discharging) direction, the filter time constant is reduced in accordance with the SOC, and the output distribution ratio of the power storage device A is reduced. Accordingly, when the power storage device A is to be overcharged or over-discharged, the output distribution ratio is reduced to prevent the charging and discharging from being limited, and the power storage system can continue control the output command while satisfying the request.

However, when the power storage device A is to be overcharged (or over-discharged) and receives the command of the over-discharging (or overcharging) direction, since there is no possibility that the power storage device A is overcharged (or over-discharged), the filter reference time constant is applied. Further, since the power storage device A has a small capacity, the SOC is to be overcharged and over-discharged due to the system frequency stabilization control, and an output command request due to a next system frequency change may not be satisfied. In order to prevent this, during a period when the system frequency stabilization control is not executed, the SOC is adjusted to the central domain (near 50%) to perform the charging and discharging so as to be able to respond to output commands from both the next charging and discharging.

In this way, according to the preferred embodiment, in order to suppress the frequency change of the power system, the power storage system which combines the power storage devices having different characteristics can be constructed, and the initial cost can be reduced as compared to that in the related art. Further, by adjusting the time constant of the filter in accordance with the SOC of the power storage device A having a small capacity, the operating rate of the power storage system is improved, and by preventing the power storage device A from being to be overcharged and over-discharged, the system frequency stabilization control can be continued.

[First Embodiment]

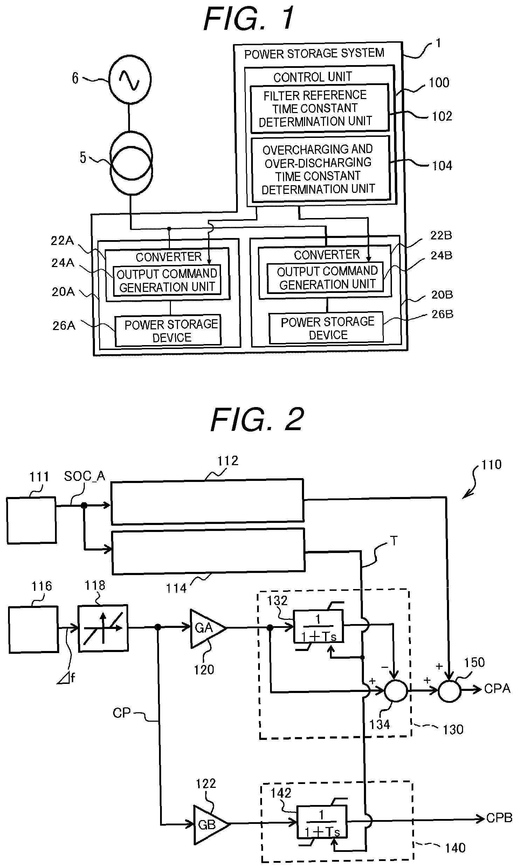

FIG. 1 is a block diagram of a power storage system 1 according to a preferred first embodiment.

In FIG. 1, the power storage system 1 includes a control unit 100 (a computer and a power storage system control device), and power storage devices 20A and 20B. The power storage devices 20A and 20B are connected in parallel, and are connected to a power system 6, which is an AC power system, via a transformer 5. Accordingly, the power storage devices 20A and 20B output power to the power system 6. "Output power" includes both a meaning of supplying the power and a meaning of absorbing the power. Therefore, the power storage devices 20A and 20B respectively include converters 22A and 22B which perform AC/DC conversion of the power, and power storage devices 26A and 26B (a first and a second power storage devices) which charge and discharge DC power. Further, the converters 22A and 22B respectively include output command generation units 24A and 24B (a computer, a power storage system control device, a command value output unit, a command value output means).

The output command generation units 24A and 24B respectively instruct respective units of the converters 22A and 22B to charge and discharge the power of the power storage devices 26A and 26B based on a change in the system frequency in the power system 6 and a filter time constant commanded by the control unit 100. The output command generation units 24A and 24B may be included in the control unit 100. It is preferable that the power storage device 26A can respond at a higher speed than the power storage device 26B, and has a smaller power storage capacity than the power storage device 26B. Hereinafter, an SOC of the power storage device 26A is referred to as an SOC_A, and an SOC of the power storage device 26B is referred to as an SOC_B.

Each of the control unit 100 and the output command generation units 24A and 24B includes a general computer hardware such as a central processing unit (CPU), a random access memory (RAM), a read only memory (ROM), and a solid state drive (SSD). An operating system (OS), a control program, various data, and the like are stored in the SSD. The OS and the control program are developed in the RAM and executed by the CPU. In FIG. 1, an inside of the control unit 100 shows functions implemented by the control program and the like as blocks.

That is, the control unit 100 includes a filter reference time constant determination unit 102 (distribution condition output unit, distribution condition output means) and an overcharging and over-discharging time constant determination unit 104 (distribution condition output unit, distribution condition output means) . In the present embodiment, the power storage device 20A performs the charging and discharging on the power system 6 based on a result obtained by performing high-pass filter processing on a command value (hereinafter, referred to as a total charge and discharge command value) of the power to be charged and discharged to the power system 6 by the power storage system 1. In contrast, the power storage device 20B performs the charging and discharging on the power system 6 based on a result obtained by performing low-pass filter processing on the total charge and discharge command value.

Each of the filter reference time constant determination unit 102 and the overcharging and over-discharging time constant determination unit 104 has a function of determining a reference time constant and an overcharging and over-discharging time constant which are time constants applied to the high-pass filter processing and the low-pass filter processing described above. Here, the reference time constant determined by the filter reference time constant determination unit 102 is applied to any of the following cases . A case where the SOC_A, that is, the SOC of the power storage device 26A is equal to or greater than a predetermined level L1 (L1 < 50%) (not shown) and the power storage system 1 performs the discharging. A case where the SOC_A is less than a predetermined level L4 (L4 > 50%) (not shown) and the power storage system 1 performs the charging.

Further, the overcharging and over-discharging time constant determined by the overcharging and over-discharging time constant determination unit 104 is applied when the reference time constant is not applied, and is set to a value smaller than the reference time constant.

[Second Embodiment]

Next, a power storage system according to a preferred second embodiment will be described.

FIG. 2 is a block diagram of a control algorithm 110 according to the second embodiment. A hardware configuration in the second embodiment is the same as that of the first embodiment (see FIG. 1). However, in the present embodiment, control programs of the control unit 100 and the output command generation units 24A and 24B execute the control algorithm 110 shown in FIG. 2.

In FIG. 2, an A system SOC acquisition unit 111 acquires an SOC_A, that is, an SOC of the power storage device 26A. A steady output command unit 112 outputs a steady output command for causing the SOC_A to approach 50%. A time constant command unit 114 (distribution condition output unit, distribution condition output means) determines a filter time constant T (distribution condition) based on the SOC_A. The filter reference time constant determination unit 102 and the overcharging and over-discharging time constant determination unit 104 in the first embodiment (see FIG. 1) described above may be considered to be included in the time constant command unit 114. The filter time constant T is commonly applied to output distribution control units 130 and 140 to be described later.

A frequency deviation acquisition unit 116 acquires a frequency deviation $\Delta f$ which is a result obtained by subtracting a frequency of the power system 6 (see FIG. 1) from a reference frequency (for example, 50 Hz or 60 Hz). A dead zone setting unit 118 (total output command unit) outputs a total charge and discharge command value CP (total output command value) which is "0" when the frequency deviation $\Delta f$ belongs to a dead zone which is an allowable range. Further, when the frequency deviation $\Delta f$ does not belong to the dead zone, the dead zone setting unit 118 outputs the total charge and discharge command value CP which increases as the frequency deviation $\Delta f$ increases. Here, the total charge and discharge command value CP is a value for commanding discharge power in a case of a positive value and is a value for commanding charge power in a case of a negative value. Amplification units 120 and 122 respectively apply predetermined gains GA and GB to the total charge and discharge command value CP and output the total charge and discharge command value CP. The gains GA and GB are, for example, the same value.

The output distribution control unit 130 (command value output unit, command value output means) includes a low-pass filter 132 and a subtractor 134. The low-pass filter 132 performs the low-pass filter processing in which a transfer function is "1/(1 + Ts)" on an output signal of the amplification unit 120. The subtractor 134 subtracts an output signal of the low-pass filter 132 from the output signal of the amplification unit 120. Therefore, the low-pass filter 132 and the subtractor 134 function as the high-pass filters having the transfer function of "Ts / (1 + Ts)".

An adder 150 outputs an addition result of an output signal of the subtractor 134 and the steady output command from the steady output command unit 112 as an A system charge and discharge command value CPA (first command value) . Further, the output distribution control unit 140 (command value output unit, command value output means) includes a low-pass filter 142. The low-pass filter 142 performs the low-pass filter processing in which the transfer function is "1/(1 + Ts)" on an output signal of the amplification unit 122. Further, the output distribution control unit 140 outputs an output signal of the low-pass filter 142 as a B system charge and discharge command value CPB (second command value). Then, the output command generation units 24A and 24B set outputs of the power storage devices 26A and 26B based on the A system and B system charge and discharge command values CPA and CPB, respectively. The output distribution control units 130 and 140 may be included in the output command generation units 24A and 24B (see FIG. 1), respectively.

As described above, since the time constant command unit 114 outputs the filter time constant T commonly applied to the output distribution control units 130 and 140, the time constant command unit 114 has a function of setting an output distribution ratio of the power storage devices 20A and 20B in accordance with the frequency deviation $\Delta f$. Then, since the output command generation unit 24A (see FIG. 1) controls the power storage device 26A (see FIG. 1) based on the A system charge and discharge command value CPA which is a result obtained by performing the high-pass filter processing on the total charge and discharge command value CP, the output of the power storage device 26A can be steeply changed in a short time. Further, since the output command generation unit 24B (see FIG. 1) controls the power storage device 26B (see FIG. 1) based on the B system charge and discharge command value CPB which is a result obtained by performing the low-pass filter processing on the total charge and discharge command value CP, the output of the power storage device 26B can be gently changed over a long time.

When a power storage device having a smaller power storage capacity than the power storage device 26B is used as the power storage device 26A and the power storage device 26A is simply controlled based on the total charge and discharge command value CP, the power storage device 26A is likely to be overcharged or over-discharged. This frequently causes a case where it is necessary to limit the charging and discharging of the power storage device 26A. According to the present embodiment, a charging and discharging amount of the power storage device 26A can be reduced, and a possibility of occurrence of such a situation can be suppressed.

When the system frequency stabilization control is not performed (when the total charge and discharge command value CP is "0"), the steady output command unit 112 outputs the steady output command such that the SOC_A approaches 50%. Accordingly, while the power storage device 26A is prevented from being overcharged or over-discharged, preparation can be advanced so as to sufficiently cope with either charging or discharging of a next system frequency stabilization control. The steady output command from the steady output command unit 112 is preferably set to a low level at which a voltage, a frequency, and the like of the power system 6 are not significantly affected. However, when the SOC_A is to be overcharged and over-discharged (for example, when the SOC_A is less than the level L1 or equal to or greater than the level L4), an absolute value of the steady output command may be increased as compared with other cases.

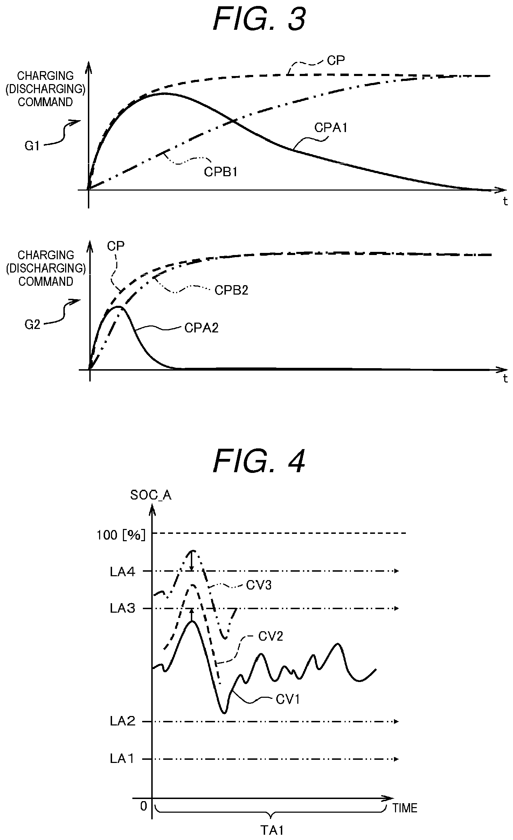

FIG. 3 is a diagram showing examples of the total charge and discharge command value CP, the A system charge and discharge command value CPA, and the B system charge and discharge command value CPB.

In FIG. 3, each vertical axis of graphs G1 and G2 represents power, and each horizontal axis represents a time point t. The graph G1 shows an example of a case where the filter time constant T is relatively large, for example, a case where the filter reference time constant determination unit 102 shown in FIG. 1 determines the filter time constant T. Further, the graph G2 shows an example of a case where the filter time constant T is relatively small, for example, a case where the overcharging and over-discharging time constant determination unit 104 shown in FIG. 1 determines the filter time constant T. In the graphs G1 and G2, an integration result of the A system charge and discharge command value CPA corresponds to a charging or discharging power amount of the power storage device 26A. According to the graph G2 in which the relatively small filter time constant T is used, it is understood that the charging or discharging power amount of the power storage device 26A can be reduced, and the output distribution ratio of the power storage device 26B can be increased.

[Third Embodiment]

Next, a power storage system according to a preferred third embodiment will be described.

A hardware configuration in the third embodiment is the same as that of the first embodiment (see FIG. 1), and a configuration of a control algorithm is the same as that of the second embodiment (see FIG. 2). However, an operation of the time constant command unit 114 (see FIG. 2) in the present embodiment is different from that in the second embodiment.

Although a frequency change of the power system 6 (see FIG. 1) is unknown, the frequency change differs depending on a season and weather. Therefore, it is preferable to improve an operating rate of the power storage system by adjusting a filter time constant T in accordance with a system status. In order to solve the technical problem, the time constant command unit 114 in the present embodiment automatically and periodically adjusts the filter time constant T with reference to transition of an SOC_A in a certain period.

FIG. 4 is a graph showing the operation of the time constant command unit 114 according to the third embodiment. In FIG. 4, a vertical axis represents the SOC_A, and a horizontal axis represents an elapsed time within a period TA1. Further, a predetermined level LA1 (a first level), an LA2, an LA3, and an LA4 (a second level) shown in the vertical axis has a relationship of "0% < LA1 < LA2 < 50% < LA3 < LA4 < 100%". The time constant command unit 114 (see FIG. 2) in the present embodiment monitors the SOC_A over the predetermined period TA1 shown in FIG. 4, and determines whether "a condition J1: in the period TA1, there is a period when SOC_A $\geq$ LA4 or SOC_A $\leq$ LA1" is satisfied for each period TA1. Here, the period TA1 is, for example, "one day", and is preferably set within a range of six hours or more and four days or less.

When a determination result is "Yes", it is considered that the power storage device 26A is to be an overcharged or over-discharged state. Therefore, the time constant command unit 114 decreases the filter time constant T by a predetermined value (for example, one second) in the next period TA1. For example, it is assumed that the SOC_A is changed as shown by a curve CV3 in a certain period TA1. Since a period when SOC_A $\geq$ LA4 exists in the curve CV3, the time constant command unit 114 decreases the filter time constant T by the predetermined value in the next period TA1. Then, in the next period TA1, if a change in the frequency deviation $\Delta f$ (see FIG. 2) is the same as that of a previous period, a characteristic of the SOC_A changes from the curve CV3 to a curve CV2.

Further, the time constant command unit 114 in the present embodiment determines whether a "condition J2: LA2 $\leq$ SOC_A $\leq$ LA3 always in the period TA1" is satisfied for each period TA1. When a determination result thereof is "Yes", it is considered that there is a margin in a charging or discharging capacity of the power storage device 26A. Therefore, the time constant command unit 114 increases the filter time constant T by a predetermined value (for example, one second) in the next period TA1.

For example, it is assumed that the SOC_A is changed as shown by a curve CV1 in a certain period TA1. Since the curve CV1 is always within a range of LA2 ≤ SOC_A ≤ LA3 within a period of the shown period TA1, the time constant command unit 114 increases the filter time constant T by the predetermined value in the next period TA1. Then, in the next period TA1, if a change in the frequency deviation Δf (see FIG. 2) is the same as that of a previous period, a characteristic of the SOC_A changes from the curve CV1 to a curve CV2.

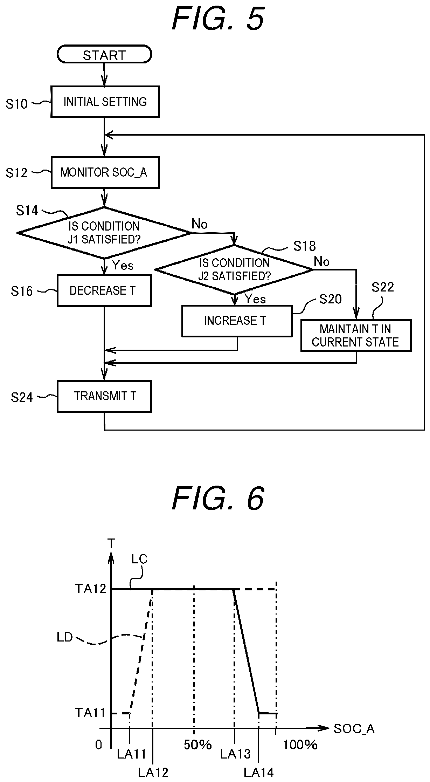

FIG. 5 is a flowchart of a filter time constant setting routine executed by the time constant command unit 114 in the present embodiment.

In FIG. 5, when processing proceeds to step S10, a predetermined initial setting is performed. At this time, the time constant command unit 114 sets the filter time constant T to a predetermined initial value. Next, when the processing proceeds to step S12, the time constant command unit 114 monitors the SOC_A within the period of the period TA1, and acquires a maximum value and a minimum value of the SOC_A within the period.

When the monitoring of the SOC_A over the period TA1 ends, the processing proceeds to step S14. Here, the time constant command unit 114 determines whether the above-described "condition J1" is satisfied based on the maximum value and the minimum value of the SOC_A described above. When it is determined to be "Yes" here, the processing proceeds to step S16, and the time constant command unit 114 decreases the filter time constant T by a predetermined value. On the other hand, when it is determined to be "No" in step S14, the processing proceeds to step S18, and the time constant command unit 114 determines whether the condition J2 is satisfied based on the maximum value and the minimum value of the SOC_A described above.

When it is determined to be "Yes" here, the processing proceeds to step S20, and the time constant command unit 114 increases the filter time constant T by the predetermined value. On the other hand, when it is determined to be "No" in step S18, the processing proceeds to step S22, and the time constant command unit 114 maintains a current value of the filter time constant T. When any of the processing of steps S16, S20, and S22 ends, the processing proceeds to step S24. Here, the filter time constant T is transmitted from the control unit 100 (see FIG. 1) to the output command generation units 24A and 24B. When the above processing ends, the processing returns to step S12. Thereafter, the processing of steps S12 to S24 is repeated while the filter time constant T is appropriately changed.

Next, an example of a method for determining the levels LA1 and LA4 shown in FIG. 4 will be described.

A condition in which system frequency stabilization control cannot be continued is that the power storage device 26A (see FIG. 1) is in an overcharged or over-discharged state. That is, when the power storage device 26A receives a maximum step command, the SOC_A becomes 0% or 100%. In such an overcharged and over-discharged state, the power storage device 26A cannot follow the A system charge and discharge command value CPA (see FIG. 2), and therefore it is desirable to avoid this case.

Therefore, it is preferable to calculate a change range of the SOC_A when the maximum step command is received in advance, set a value of the change range as the level LA1, and set a value obtained by subtracting the change range from 100% as the level LA4. Accordingly, even when the maximum step command is received, the filter time constant T can be set such that the overcharged and over-discharged state of the power storage device 26A can be suppressed.

When a rated output of the converter 22A is P [MW], a power storage capacity of the power storage device 26A is C[MW·s], the filter time constant is T [s], and when the dead zone setting unit 118 outputs a total charge and discharge command value CP, which is a step command same as a rated output P, a stored power amount ΔC which is increased or decreased in the power storage device 26A is as shown in the following equation (1).

[Formula 1]

$$\Delta C = \int_0^\infty P \left\{ 1 - \left( 1 - e^{-\frac{t}{T}} \right) \right\} dt = PT$$

According to equation (1), when the dead zone setting unit 118 (see FIG. 2) outputs a step command of P[MW] as the total charge and discharge command value CP, the SOC_A, that is, the SOC of the power storage device 26A, changes by ΔSOC of the following equation (2).

[Formula 2]

$$\Delta SOC = \frac{PT}{C} \times 100$$

Therefore, when the SOC_A is an SOC1 shown in the following equation (3), and the dead zone setting unit 118 outputs a step command for discharging P [MW] as the total charge and discharge command value CP, the SOC_A reaches 0%.

[Formula 3]

$$SOC1 = \frac{PT}{C} \times 100$$

Similarly, when the SOC_A is a SOC2 shown in the following equation (4), and the dead zone setting unit 118 outputs a step command for discharging P [MW] as the total charge and discharge command value CP, the SOC_A reaches 100%.

[Formula 4]

$$SOC2 = \frac{C-PT}{C} \times 100$$

Therefore, the SOC1 and the SOC2 shown in equations (3) and (4) may be set to the levels LA1 and LA4 in FIG. 4, respectively. Then, by adjusting the filter time constant T such that the SOC_A falls within a range of LA1 < SOC_A < LA4, an operating rate of the power storage device 26A can be improved while suppressing overcharging or over-discharging of the power storage device 26A.

Further, also in the present embodiment, when the SOC_A is to be overcharged or over-discharged, an absolute value of the steady output command output by the steady output command unit 112 may be increased. For example, when the SOC_A is less than the level LA1 or exceeds the level LA1 described above, the absolute value of the steady output command may be increased as compared with a case where the SOC_A is in the range of the levels LA1 to LA4.

[Fourth Embodiment]

Next, a power storage system according to a preferred fourth embodiment will be described.

A hardware configuration in the fourth embodiment is the same as that of the first embodiment (see FIG. 1), and a configuration of a control algorithm is the same as that of the second embodiment (see FIG. 2). However, an operation of the time constant command unit 114 (see FIG. 2) in the present embodiment is different from that in the second embodiment.

FIG. 6 is a graph showing an operation of the time constant command unit 114 according to the fourth embodiment. A vertical axis of FIG. 6 is the filter time constant T, and a horizontal axis is an SOC_A. A solid line characteristic LC is applied when the power storage device 26A is charged, and a broken line characteristic LD is applied when the power storage device 26A is discharged. Further, as shown in the figure, predetermined levels LA11, LA12 (third level), LA13 (fourth level), LA14 have a relationship of "0% < LA11 < LA12 < 50% < LA13 < LA14 < 100%". These levels LA11, LA12, LA13, and LA14 may have the same values as the levels LA1, LA2, LA3, and LA4 in the third embodiment (see FIG. 4), respectively.

As shown in the solid line characteristic LC, when "SOC_A > LA14" is satisfied when the power storage device 26A is charged, the time constant command unit 114 sets the filter time constant T to a predetermined value TA11. When "SOC_A < LA13" is satisfied when the power storage device 26A is charged, the time constant command unit 114 sets the filter time constant T to a predetermined value TA12 (however, TA11 < TA12) . When "LA13 < SOC_A < LA14" is satisfied when the power storage device 26A is charged, the filter time constant T is linearly changed in accordance with the SOC_A.

Further, as shown in the broken line characteristic LD, when "SOC_A < LA11" is satisfied when the power storage device 26A is discharged, the time constant command unit 114 sets the filter time constant T to the predetermined value TA11. When "SOC_A > LA12" is satisfied when the power storage device 26A is discharged, the time constant command unit 114 sets the filter time constant T to a predetermined value TA12. When "LA11 < SOC_A < LA12" is satisfied when the power storage device 26A is discharged, the filter time constant T is linearly changed in accordance with the SOC_A.

When a system frequency of the power system 6 (see FIG. 1) changes steeply and the power storage device 26A is likely to be overcharged and over-discharged, by shortening the filter time constant T according to the characteristics LC and LD shown in FIG. 6, a load on the power storage device 20A can be reduced. In the present embodiment, the filter time constant T can be adjusted without waiting for an end of the period TA1 (see FIG. 4) in the third embodiment. Therefore, for example, even when the system frequency continuously changes due to a sudden event such as a power failure of the power system 6 and lightning strike, the power storage device 26A is suppressed from being overcharged or over-discharged while reducing the change in the system frequency.

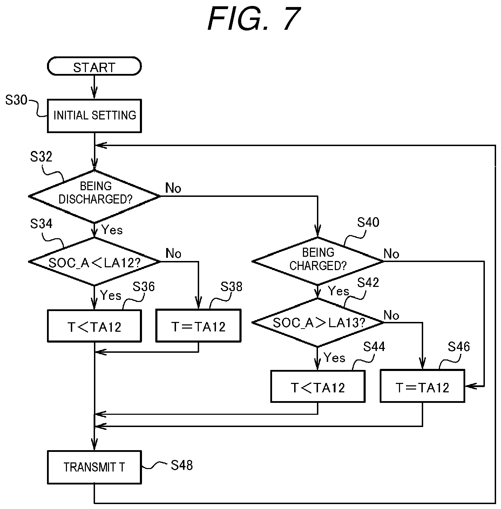

FIG. 7 is a flowchart of a filter time constant setting routine executed by the time constant command unit 114 in the present embodiment.

In FIG. 7, when processing proceeds to step S30, a predetermined initial setting is performed. At this time, the time constant command unit 114 initially sets the filter time constant T to the predetermined value TA12 (see FIG. 6). Next, when the processing proceeds to step S32, the time constant command unit 114 determines whether the power storage device 26A is being discharged. When it is determined to be "Yes" here, the processing proceeds to step S34, and the time constant command unit 114 determines whether "SOC_A < LA12" is satisfied.

When it is determined to be "Yes" in step S34, the processing proceeds to step S36, and the time constant command unit 114 sets the filter time constant T to a value smaller than the predetermined value TA12 according to the characteristic LD (see FIG. 6). On the other hand, when it is determined to be "No" in step S34, the processing proceeds to step S38, and the time constant command unit 114 sets the filter time constant T to the predetermined value TA12.

Further, when it is determined to be "No" (not being discharged) in step S32, the processing proceeds to step S40, and the time constant command unit 114 determines whether the power storage device 26A is being charged. When it is determined to be "Yes" here, the processing proceeds to step S42, and the time constant command unit 114 determines whether "SOC_A > LA13" is satisfied.

When it is determined to be "Yes" in step S42, the processing proceeds to step S44, and the time constant command unit 114 sets the filter time constant T to the value smaller than the predetermined value TA12 according to the characteristic LC (see FIG. 6). On the other hand, when it is determined to be "No" in step S42, or it is determined to be "No" in step S40 described above, the processing proceeds to step S46, and the time constant command unit 114 sets the filter time constant T to the predetermined value TA12.

When any of the processing of steps S36, S38, S44, and S46 ends, the processing proceeds to step S48. Here, the filter time constant T is transmitted from the control unit 100 (see FIG. 1) to the output command generation units 24A and 24B. When the above processing ends, the processing returns to step S32. Thereafter, the processing of steps S32 to S48 is repeated while the filter time constant T is appropriately changed.

[Effect of Embodiment]

According to the preferred embodiments as described above, a power storage system control device includes: a distribution condition output unit (102, 104, and 114) configured to, when a power storage system (1) including a first power storage device (26A) configured to output power to a power system (6) and a second power storage device (26B) having a characteristic different from that of the first power storage device (26A) and configured to output the power to the power system (6) outputs the power to the power system (6), output a distribution condition (T) for distributing a total output command value (CP), which is a command value obtained by summing up the power to be output by the first and second power storage devices (26A and 26B), to the first power storage device (26A) and the second power storage device (26B) ; and a command value output unit (24A, 24B, 130, and 140) configured to output, based on the distribution condition (T), a first command value (CPA) for commanding the power output from the first power storage device (26A) and a second command value (CPB) for commanding the power output from the second power storage device (26B). Accordingly, the appropriate distribution condition (T) in accordance with the characteristics of the first and the second power storage devices (26A and 26B) can be set, and overcharging or over-discharging of the power storage device can be suppressed.

Further, it is preferable that the power storage system control device further includes a total output command unit (118) configured to output the total output command value (CP) so as to reduce a frequency deviation (Δf) corresponding to the frequency deviation (Δf) in the power system (6). Accordingly, the frequency of the power system (6) can be stabilized.

Further, it is more preferable that the distribution condition output unit (102, 104, and 114) changes the distribution condition (T) based on an SOC (SOC_A) of the first power storage device (26A). Accordingly, the overcharging or over-discharging of the first power storage device (26A) can be further suppressed.

Further, it is more preferable that the power storage system control device further includes a steady output command unit (112) configured to output a steady output command so as to bring the SOC (SOC_A) of the first power storage device (26A) close to a predetermined reference value (50%), and to increase an absolute value of the steady output command in a case where the SOC (SOC_A) is less than a first level (LA1) or exceeds a second level (LA4) as compared with a case where the SOC (SOC_A) is equal to or greater than the first level (LA1) and equal to or less than the second level (LA4). Accordingly, the overcharging or over-discharging of the first power storage device (26A) can be further suppressed.

Further, it is more preferable that the distribution condition output unit (102, 104, and 114) is configured to acquire a maximum value and a minimum value of the SOC (SOC_A) of the first power storage device (26A) within a predetermined period (TA1), and set the distribution condition (T) based on a result thereof. Accordingly, the overcharging or over-discharging of the first power storage device (26A) can be further suppressed while following the frequency change of the power system (6) whose appearance differs depending on the season and the weather.

Further, it is more preferable that a power storage capacity of the first power storage device (26A) is smaller than a power storage capacity of the second power storage device (26B), and the distribution condition output unit (102, 104, and 114) has a function of setting the distribution condition (T) such that an absolute value of an output power amount of the first power storage device (26A) is smaller in a case where an SOC (SOC_A) of the first power storage device (26A) is less than a third level (LA12) or exceeds a fourth level (LA13) as compared with a case where the SOC (SOC_A) is equal to or greater than the third level (LA12) and equal to or less than the fourth level (LA13). Therefore, for example, even when the system frequency changes due to a sudden event such as a power failure of the power system (6) and lightning strike, the power storage device 26A is suppressed from being overcharged or over-discharged while suppressing the change in the system frequency.

[Modification]

The invention is not limited to the above-described embodiments, and various modifications can be made. The above-described embodiments are shown to facilitate understanding of the invention, and are not necessarily limited to those having all the configurations described above. Apart of a configuration of a certain embodiment can be replaced with a configuration of another embodiment, and the configuration of another embodiment can also be added to the configuration of one embodiment. A part of the configuration of each embodiment can be deleted, or added to, or replaced with another configuration. Further, control lines and information lines shown in the drawings are considered to be necessary for the description, and all control lines and information lines required on the product are not necessarily shown. It may be considered that almost all the configurations are actually connected to each other. The modification that can be applied to the above-described embodiment is, for example, as follows.

(1) Although the power system 6 in each of the above embodiments is an AC power system, the power system 6 may be a DC power system. Further, in each of the above-described embodiments, a case where the power storage capacity of the power storage device 26A is smaller than the power storage capacity of the power storage device 26B has been described, but a magnitude relationship between the two may be reversed.

(2) Further, in each of the above-described embodiments, an example in which the "filter time constant T" is applied as an example of the distribution condition has been described, but the distribution condition is not limited to the "filter time constant T". For example, any function indicating transition of a ratio of the A system and B system charge and discharge command values CPA and CPB may be set as the distribution condition. However, when the power storage device 26A has a capacity smaller than that of the power storage device 26B and can respond at a high speed, it is preferable to set the distribution condition such that the ratio of the A system charge and discharge command value CPA to the total charge and discharge command value CP decreases with the passage of time.

(3) Since hardware of the control unit 100 and the output command generation units 24A and 24B in the above-described embodiments can be implemented by a general computer, the control algorithm 110 shown in FIG. 2, the flowcharts shown in FIGS. 5 and 7, a program for executing the above-described various processing, and the like may be stored in a storage medium or distributed via a transmission path.

(4) Although the control algorithm 110 shown in FIG. 2, the flowcharts shown in FIGS. 5 and 7, and various processing described above have been described as software processing using a program in the above-described embodiments, a part or all of them may be replaced with hardware processing using an application specific integrated circuit (ASIC) or a field programmable gate array (FPGA).

**Claims**

1. A power storage system control device comprising:

a distribution condition output unit configured to, when a power storage system including a first power storage device configured to output power to a power system and a second power storage device having a characteristic different from that of the first power storage device and configured to output the power to the power system outputs the power to the power system, output a distribution condition for distributing a total output command value, which is a command value obtained by summing up the power to be output by the first and second power storage devices, to the first power storage device and the second power storage device; and

a command value output unit configured to output, based on the distribution condition, a first command value for commanding the power output from the first power storage device and a second command value for commanding the power output from the second power storage device.

2. The power storage system control device according to claim 1, further comprising:
a total output command unit configured to output the total output command value so as to reduce a frequency deviation corresponding to the frequency deviation in the power system.

3. The power storage system control device according to claim 1, wherein
the distribution condition output unit changes the distribution condition based on an SOC of the first power storage device.

4. The power storage system control device according to claim 1, further comprising:
a steady output command unit configured to output a steady output command so as to bring the SOC of the first power storage device close to a predetermined reference value, and to increase an absolute value of the steady output command in a case where the SOC is less than a first level or exceeds a second level as compared with a case where the SOC is equal to or greater than the first level and equal to or less than the second level.

5. The power storage system control device according to claim 1, wherein
the distribution condition output unit is configured to acquire a maximum value and a minimum value of the SOC of the first power storage device within a predetermined period, and set the distribution condition based on a result thereof.

6. The power storage system control device according to claim 1, wherein
a power storage capacity of the first power storage device is smaller than a power storage capacity of the second power storage device, and
the distribution condition output unit has a function of setting the distribution condition such that an absolute value of an output power amount of the first power storage device is smaller in a case where an SOC of the first power storage device is less than a third level or exceeds a fourth level as compared with a case where the SOC is equal to or greater than the third level and equal to or less than the fourth level.

7. A power storage system comprising:

a first power storage device configured to output power to a power system;
a second power storage device having a characteristic different from that of the first power storage device and configured to output the power to the power system; and
a power storage system control device, wherein
the power storage system control device includes:

a distribution condition output unit configured to output, when the first and second power storage devices output the power to the power system, a distribution condition for distributing a total output command value, which is a command value obtained by summing up the power to be output by the first and second power storage devices, to the first power storage device and the second power storage device; and
a command value output unit configured to output, based on the distribution condition, a first command value for commanding the power output from the first power storage device and a second command value for commanding the power output from the second power storage device.

8. A program for causing a computer to function as:

a distribution condition output unit configured to, when a power storage system including a first power storage device configured to output power to a power system and a second power storage device having a characteristic different from that of the first power storage device and configured to output the power to the power system outputs the power to the power system, output a distribution condition for distributing a total output command value, which is a command value obtained by summing up the power to be output by the first and second power storage devices, to the first power storage device and the second power storage device; and

a command value output unit configured to output, based on the distribution condition, a first command value for commanding the power output from the first power storage device and a second command value for commanding the power output from the second power storage device.

# FIG. 1

POWER STORAGE SYSTEM 1

CONTROL UNIT 100

FILTER REFERENCE TIME CONSTANT DETERMINATION UNIT 102

OVERCHARGING AND OVER-DISCHARGING TIME CONSTANT DETERMINATION UNIT 104

6

5

22A
24A
20A
26A

CONVERTER

OUTPUT COMMAND GENERATION UNIT

POWER STORAGE DEVICE

22B
24B
20B
26B

CONVERTER

OUTPUT COMMAND GENERATION UNIT

POWER STORAGE DEVICE

# FIG. 2

111  SOC_A

112

110

116  118

$\Delta f$

$GA$  120

132  $\dfrac{1}{1+Ts}$

T

114

CP

$-$

$+$

134  130

$+$

150  CPA

122  $GB$

142  $\dfrac{1}{1+Ts}$

CPB

140

## FIG. 3

CHARGING
(DISCHARGING)
COMMAND

G1

CP

CPA1

CPB1

t

CHARGING
(DISCHARGING)
COMMAND

G2

CP

CPB2

CPA2

t

## FIG. 4

SOC_A

100 [%]

LA4

CV3

LA3

CV2

CV1

LA2

LA1

0

TIME

TA1

## FIG. 5

```
                    ( START )
                       │
                       ▼
  S10 ─── ┌─────────────────────┐
          │   INITIAL SETTING   │
          └─────────────────────┘
                       │ ◄──────────────────────────────┐
                       ▼                                 │
  S12 ─── ┌─────────────────────┐                        │
          │    MONITOR SOC_A     │                        │
          └─────────────────────┘                        │
                       │                                 │
      S14 ─┐           ▼                                 │
          ◇─────────────────────◇    No                  │
          │   IS CONDITION      │─────────┐              │
          │   J1 SATISFIED?     │         ▼              │
          ◇─────────────────────◇       S18 ─┐           │
                  │ Yes                  ◇──────────────◇   No     │
  S16 ─── ┌──────────────┐         │  IS CONDITION │────────┐     │
          │  DECREASE T  │         │  J2 SATISFIED?│        │     │
          └──────────────┘         ◇──────────────◇        │     │
                  │                      │ Yes      S20     │ S22 │
                  │                      ▼       ┌─┘        ▼     │
                  │              ┌──────────────┐  ┌────────────────┐
                  │              │  INCREASE T  │  │  MAINTAIN T IN  │
                  │              └──────────────┘  │  CURRENT STATE  │
                  │                      │         └────────────────┘
                  │ ◄───────────────────┘                 │
                  │ ◄─────────────────────────────────────┘
                  ▼
  S24 ─── ┌──────────────┐
          │  TRANSMIT T  │
          └──────────────┘
                  │
                  └──────────────────────────────────────┘
```

## FIG. 6

# FIG. 7

Europäisches
Patentamt

European
Patent Office

Office européen
des brevets

## EUROPEAN SEARCH REPORT

Application Number

EP 21 17 1934

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/183239 A1 (SHIBATA TAKAYUKI [JP] ET AL) 28 June 2018 (2018-06-28) * the whole document * ----- | 1-8 | INV. H02J3/32 H02J7/00 |
| X | EP 3 399 619 A1 (HITACHI POWER SOLUTIONS CO LTD [JP]) 7 November 2018 (2018-11-07) * the whole document * ----- | 1,7,8 | |

TECHNICAL FIELDS
SEARCHED      (IPC)

H02J

The present search report has been drawn up for all claims

| Place of search | Date of completion of the search | Examiner |
|---|---|---|
| Munich | 29 September 2021 | Annibal, Stewart |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...................................................................

& : member of the same patent family, corresponding
document

EPO FORM 1503 03.82 (P04C01)

**EP 3 916 946 A1**

## ANNEX TO THE EUROPEAN SEARCH REPORT
## ON EUROPEAN PATENT APPLICATION NO.

EP 21 17 1934

29-09-2021

| Patent document cited in search report | | Publication date | Patent family member(s) | | Publication date |
|---|---|---|---|---|---|
| US 2018183239 | A1 | 28-06-2018 | GB | 2562369 A | 14-11-2018 |
| | | | JP | 6289423 B2 | 07-03-2018 |
| | | | JP | 2017046440 A | 02-03-2017 |
| | | | US | 2018183239 A1 | 28-06-2018 |
| | | | WO | 2017033587 A1 | 02-03-2017 |
| EP 3399619 | A1 | 07-11-2018 | EP | 3399619 A1 | 07-11-2018 |
| | | | JP | 6596461 B2 | 23-10-2019 |
| | | | JP | 2018186662 A | 22-11-2018 |

EPO FORM P0459

For more details about this annex : see Official Journal of the European Patent Office, No. 12/82

**EP 3 916 946 A1**

**Patent documents cited in the description**

- JP 2010009840 A